# EUROPÄISCHE PATENTANMELDUNG

(11) **EP 1 849 595 A1**
(43) Veröffentlichungstag der Anmeldung: **31.10.2007**
(21) Anmeldenummer: 06008467.0
(22) Anmeldetag: 25.04.2006
(51) Int. Cl.: B32B 21/14, B27D 1/04, B27D 1/10

(54) **Aus Echtholz bestehendes Dekorblatt zur Beschichtung von Türen, Möbelteilen oder dergleichen**

(71) Anmelder: Vietmeyer, Adolf, 32108 Bad Salzuflen (DE)
(72) Erfinder: Vietmeyer, Adolf, 32108 Bad Salzuflen (DE)
(74) Vertreter: Specht, Peter

(57) **Zusammenfassung**

Beschrieben wird ein aus Echtholz bestehendes Dekorblatt (1) zur Beschichtung von Türen, Möbelteilen oder dergleichen, wobei das Dekorblatt (1) aus mindestens zwei Lagen von Echtholz-Furnierstreifen (3a, 4a) besteht, welche bezüglich ihres Faserverlaufes kreuzweise zueinander verlaufend vollflächig miteinander verleimt sind. Bevorzugt werden drei Lagen von Echtholz-Furnierstreifen (2a, 3a, 4a), die übereinander liegend miteinander verleimt sind, wobei die Fasern der mittleren Lage (3) quer zu den gleichverlaufenden Fasern der Außenlagen (2, 4) ausgerichtet sind.

## Beschreibung

Türen, Möbelteile oder ähnliche Gegenstände werden aus Kostengründen aus weniger hochwertigen, dafür aber tragfähigen und stabilen Holzwerkstoffen wie z.B. Sperrholzplatten, Faserplatten oder dergleichen gefertigt und entweder lackiert oder mit einer Beschichtung versehen, wobei als Beschichtungsmaterialien Kunststofffolien oder Echtholz-Furniere bekannt sind.

Sofern eine Beschichtung aus Echtholz-Furnieren gewählt wird, muss diese Beschichtung in den meisten Fällen aus einzelnen Furnierstreifen unmittelbar auf dem zu beschichtenden Bauteil aufgebracht werden, Dies bedeutet einen enormen Arbeits- und Zeitaufwand, der sich auf die Kosten des fertig beschichteten Bauteiles sehr nachteilig auswirkt. Es ist auch bekannt, aus Echtholz-Furnierstreifen ein Dekorblatt vorzufertigen in der Weise, dass die Fumierstreifen vor der Beschichtung eines Bauteiles zu einem großflächigen Blatt zusammengefügt werden. An den Nahtstellen oder Verbindungsstellen zwischen zwei Furnierstreifen wird dann häufig an der Rückseite des Blattes ein Papierstreifen aufgeklebt, es ist auch bekannt, die Rückseite des Blattes vollständig mit Papier zu beschichten.

Auch diese Art der Vorfertigung ist sehr zeit- und kostenaufwendig und darüber hinaus mit dem gravierenden Nachteil behaftet, dass ein derartig hergestelltes Dekorblatt sehr brüchig ist, da Echtholz-Fumierstreifen in der Regel sehr geringe Dicken - etwa 0,5 mm - aufweisen und somit längs der Fasern des Echtholzes sehr leicht auseinanderbrechen können, auch dann, wenn an der Rückseite vollständig oder zumindest im Verbindungsbereich zweier aneinander angrenzender Furnierstreifen Papierbeschichtungen vorgesehen werden.

Je größer derart vorgefertigte Dekorblätter sind, umso größer ist auch die Bruchgefahr, da ein derartiges Dekorblatt nicht gehandhabt werden kann, ohne dass sich dieses Dekorblatt aufgrund seiner fehlenden Eigenstabilität verbiegt oder verwindet.

Der vorliegenden Erfindung liegt die Aufgabe zugrunde, ein aus Echtholz bestehendes Dekorblatt zur Beschichtung von Türen, Möbelteilen oder dergleichen zu schaffen, welches insgesamt relativ preiswert herstellbar und ohne jede Bruchgefahr unabhängig von seiner flächenmäßigen Größe handhabbar ist.

Diese Aufgabe wird erfindungsgemäß dadurch gelöst, dass das Dekorblatt aus mindestens zwei Lagen von Echtholz-Furnierstreifen besteht, welche bezüglich ihres Faserverlaufes kreuzweise zueinander verlaufend vollflächig miteinander verleimt sind.

Durch das kreuzweise Verleimen der beiden übereinander liegenden Lagen von Furnierstreifen ergibt sich eine gegenseitige Stabilisierung der einzelnen Lagen mit der erfreulichen Folge, dass die Bruchgefahr jeder einzelnen Lage längs ihres natürlichen Faserverlaufes praktisch aufgehoben ist.

Obwohl für ein erfindungsgemäßes Dekorblatt mindestens zwei Lagen von Furnierstreifen benötigt werden, bietet ein erfindungsgemäßes Dekorblatt auch unter wirtschaftlichen Gesichtspunkten immer noch große Vorteile, da einerseits die flächige Verleimung schneller und sicherer durchführbar ist als die ausschließliche Verleimung an den aneinander angrenzenden Stirnkanten von Furnierstreifen einlagiger Dekorblätter und da andererseits die Weiterverarbeitung des erfindungsgemäßen Dekorblattes praktisch ohne Bruchgefahr möglich ist.

Dem Hersteller von Türen, Möbelteilen oder anderen Einrichtungsgegenständen kann somit ein Dekorblatt zur Verfügung gestellt werden, welches in jedem Falle in einem einfachen Verleimungsvorgang auf ein zu beschichtendes Bauteil aufgebracht werden kann, so dass sich auch die Endverarbeitung beim entsprechenden Hersteller erheblich vereinfacht.

Außer diesen genannten Vorteilen bietet die erfindungsgemäße Konstruktion eines Dekorblattes auch noch die Möglichkeit, dessen jeweilige Sichtseite mit sehr unterschiedlichen Mustern auszustatten. So können beispielsweise bei der Gestaltung einer Sichtseite unterschiedlich breite Furnierstreifen aus unterschiedlichen Hölzern zur Gestaltung eines Musters Verwendung finden, wobei durchaus auch Furnierstreifen sehr geringer Breite von nur wenigen Millimetern benachbart von Furnierstreifen größerer Breite von mehreren Zentimetern angeordnet sein können.

Denkbar ist es auch, auf der Sichtseite zwischen zwei Echtholz-Furnierstreifen einen aus Metall gefertigten Streifen anzuordnen, dessen Dicke der Dicke der Echtholz-Furnierstreifen entspricht, wodurch besonders interessante optische Effekte erzielt werden können.

Somit bietet ein erfindungsgemäßes Dekorblatt nicht nur die schon oben erwähnten Vorteile der äußerst wirtschaftlichen Herstellung und der extrem vereinfachten Weiterverarbeitung, sondern auch den nicht zu unterschätzenden Vorteil, die jeweilige Sichtseite extrem abwechslungsreich gestalten zu können, wie vorstehend angedeutet wurde.

Weitere Merkmale der Erfindung sind Gegenstand weiterer Unteransprüche.

Ausführungsbeispiele der Erfindung sind in den beigefügten Zeichnungen dargestellt und werden im Folgenden näher beschrieben.

Es zeigen:
- Figur 1: eine Draufsicht auf ein erfindungsgemäßes, dreilagiges Dekorblatt, bei dem durch zwei Bruchlinien alle drei übereinander liegenden Lagen sichtbar gemacht sind
- Figur 2: einen Teilschnitt nach der Linie II-II in Figur 1
- Figuren 3-5: Teilansichten von erfindungsgemäßen Dekorblättern mit unterschiedlichen Mustern.

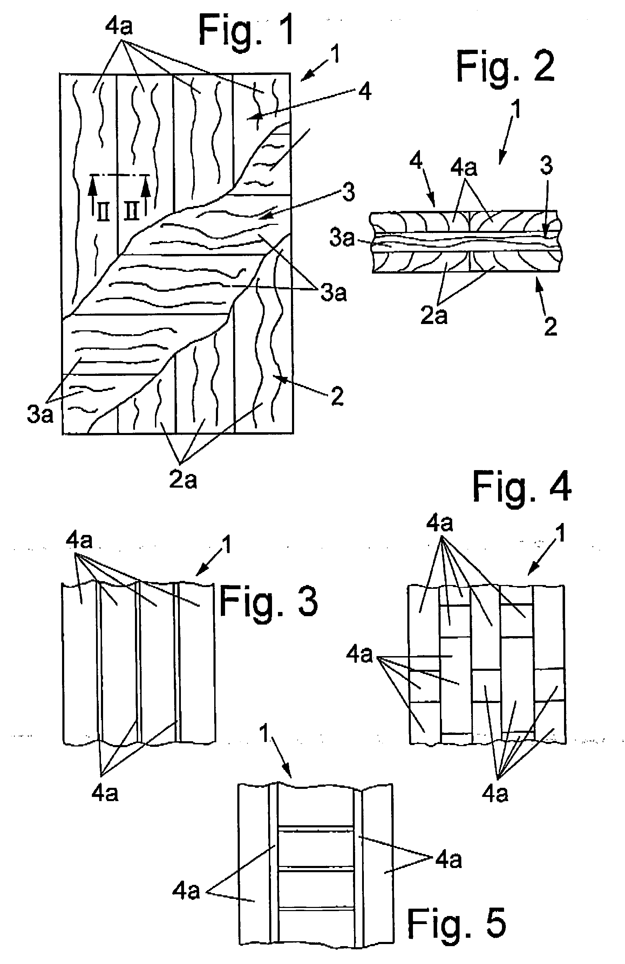

In den Figuren 1 und 2 ist ein insgesamt mit dem Bezugszeichen 1 bezeichnetes Dekorblatt dargestellt, welches insgesamt aus drei Lagen 2, 3 und 4 besteht, Jede dieser Lagen 2-4 wird gebildet aus Echtholz-Fumierstteifen 2a - 4a, wobei die Besonderheit insgesamt darin besteht, dass die Fasern der mittleren Lage 3 quer zu den gleichverlaufenden Fasern der äußeren Lagen 2a und 4a verlaufen.

Die einzelnen Lagen 2-4 sind vollflächig miteinander verleimt, so dass sich insgesamt ein Dekorblatt 1 ergibt, welches durch die Kreuzverleimung seiner einzelnen Lagen 2-4 ohne jede Bruchgefahr der einzelnen Lagen 2 - 4 problemlos gehandhabt werden kann und ebenso problemlos vom Hersteller eines derartigen Dekorblattes 1 zu einem Verwender, nämlich einem Möbelhersteller oder dergleichen, transportiert werden kann. Außerdem kann ein derartiges Dekorblatt nicht nur auf ebene Bauteile wie Türen, Möbelteile oder dergleichen aufgebracht werden, sondern auch auf eindimensional gewölbte Möbel- oder Inneneinrichtungsteile.

Aus Kostengründen können die nach dem Verleimen des Dekorblattes 1 auf ein tragendes Teil nicht sichtbaren Lagen 2 und 3 ohne weiteres aus preiswerten Schälfurnieren bestehen, während die die Sichtseite bildende Lage 4 bevorzugt aus Edelfurnieren und/oder aus Fineline-Furnieren besteht.

Durch die vollflächige Verleimung der einzelnen Furnierstreifen 2a - 4a miteinander ist es nicht mehr notwendig, die einzelnen Furnierstreifen 2a - 4a jeder einzelnen Lage an ihren Nahtstellen miteinander zu verleimen, so dass sich die Herstellung eines erfindungsgemäßen Dekorblattes trotz der Verwendung mehrerer Lagen relativ einfach gestaltet.

Wie aus den Figuren 3-5 hervorgeht, besteht aufgrund des Aufbaus des erfindungsgemäßen Dekorblattes die vorteilhafte Möglichkeit, die einzelnen Furnierstreifen 4a der die Sichtseite bildenden Lage 4 sehr unterschiedlich zu gestalten und auf diese Weise sehr unterschiedliche Dekorbilder zu schaffen.

So können z.B., wie Figur 3 zeigt, unterschiedlich breite Furnierstreifen 4a Verwendung finden, wobei die unterschiedlich breiten Furnierstreifen außerdem auch noch aus unterschiedlichen Hölzern bestehen, so dass sich eine farbliche Unterscheidung ergibt.

Es besteht auch die Möglichkeit, zwischen zwei Echtholz-Furnierstreifen 4a Metallstreifen anzubringen, wobei diese Metallstreifen dann die gleiche Dicke aufweisen wie die Echtholz-Furnierstreifen 4a. Auch hierdurch ergeben sich interessante optische Effekte.

Wie die Figuren 4 und 5 zeigen, können auch Furnierstreifen 4a unterschiedlicher Längen und unterschiedlicher Holzarten zur Bildung von Dekor-Mustern nebeneinander angeordnet sein, wobei diese Figuren 3-5 nur andeutungsweise zeigen können, welche Gestaltungsmöglichkeiten für den erfindungsgemäße Aufbau eines aus Echtholz bestehenden Dekorblattes 1 gegeben sind.

Abweichend von den dargestellten Ausführungsbeispielen ist es auch möglich, ein Dekorblatt lediglich aus zwei übereinander liegenden Lagen 3 und 4 zu bilden, wobei dann die jeweiligen Furnierstreifen 3a und 3b bezüglich ihres Faserverlaufes kreuzweise zueinander verlaufend vollflächig miteinander verleimt sind.

Die die Sichtseite 4 des Dekorblattes 1 bildende Lage besteht vorteilhafterweise aus Edelfurnieren und/oder aus Fineline-Furnieren, während die darunter befindlichen, nach der Verarbeitung des Dekorblattes 1 nicht mehr sichtbaren Lagen 3 und 2 durchaus aus Kostengründen auch aus Schälfurnieren gebildet sein können.

## Patentansprüche

1. Aus Echtholz bestehendes Dekorblatt (1) zur Beschichtung von Türen, Möbelteilen oder dergleichen, **dadurch gekennzeichnet, dass** das Dekorblatt (1) aus mindestens zwei Lagen (3,4) von Echtholz-Furnierstreifen (3a, 4a) besteht, welche bezüglich ihres Faserverlaufes kreuzweise zueinander verlaufend vollflächig miteinander verleimt sind.

2. Dekorblatt nach Anspruch 1, **dadurch gekennzeichnet, dass** drei Lagen (2, 3, 4) von Echtholz-Furnierstreifen (2a, 3a, 4a) übereinander liegend miteinander verleimt sind, wobei die Fasern der mittleren Lage (3) quer zu den gleichverlaufenden Fasern der Außenschichten (2, 4) ausgerichtet sind.

3. Dekorblatt nach Anspruch 1 oder 2, **dadurch gekennzeichnet, dass** zwischen einzelnen Echtholz-Furnierstreifen (4a) einer als Sichtseite genutzten Außenlage (4) aus Metall gefertigte Streifen angeordnet sind, deren Dicke der Dicke der Echtholz-Furnierstreifen (4a) entspricht.

4. Dekorblatt nach Anspruch 1 oder 2, **dadurch gekennzeichnet, dass** auf einer als Sichtseite genutzten AuBenlage (4) Echtholz-Fumierstreifen aus unterschiedlichen Holzarten angeordnet sind.

5. Dekorblatt nach einem der vorhergehenden Ansprüche, **dadurch gekennzeichnet, dass** die Echtholz-Furnierstreifen (4a) einer Sichtseite aus Edelfurnieren und/oder aus Fineline-Furnieren bestehen und zumindest eine der weiteren Lagen (2, 3) aus Schälfurnieren gebildet ist.
